# EUROPÄISCHE PATENTANMELDUNG

(11) **EP 2 366 988 A1**
(43) Veröffentlichungstag der Anmeldung: **21.09.2011**
(21) Anmeldenummer: 10002921.4
(22) Anmeldetag: 19.03.2010
(51) Int. Cl.: G01L 3/14, F03D 7/02

(54) **Verfahren und Meßvorrichtung zur Drehmomenterfassung in einem Getriebe mittels eines Schwingungssensors**

(71) Anmelder: Winergy AG, 46562 Voerde (DE)
(72) Erfinder: Klein-Hitpass, Arno, 52074 Aachen (DE); Reimers, Jan-Dirk, 52074 Aachen (DE)
(74) Vertreter: Michau, Sascha

(57) **Zusammenfassung**

Erfindungsgemäß wird zur Drehmomenterfassung in einem Getriebe (371,372) mittels zumindest eines Schwingungssensors (301,302) zumindest ein Schwingungssignal erfaßt, das einer Zahneingriffsfrequenz von miteinander in Eingriff stehenden Getriebeverzahnungen zugeordnet ist, und dessen Phasenverschiebung von zumindest einer Zahneingriffsdauer der miteinander in Eingriff stehenden Getriebeverzahnungen abhängig ist. Dabei ist die Zahneingriffsdauer infolge von Verzahnungsverformungen drehmomentabhängig. Aus der Phasenverschiebung des erfaßten Schwingungssignals und/oder der zumindest einen Zahneingriffsdauer wird ein auf das Getriebe einwirkendes Drehmoment ermittelt.

## Beschreibung

Verfahren zur Drehmomenterfassung in einem Getriebe, Meßvorrichtung und Steuerungsprogramm

An Getriebe umfassende Antriebssysteme wird in industriellen Verarbeitungs- und Fertigungsprozessen eine breite Palette von komplexen Anforderungen gestellt, beispielsweise zuverlässiger Betrieb über eine lange Nutzungsdauer bei minimalem Wartungsaufwand. Industrielle Verarbeitungs- und Fertigungsprozesse beeinträchtigende Ausfälle eines Antriebssystems können beispielsweise aufgrund von Anlagenstillstandszeiten zu hohen finanziellen Schäden führen.

Insbesondere in Windkraftanlagen sind Getriebe während ihrer Einsatzdauer einer dynamischen Lastfolge von Dreh- und Biegemomenten sowie axialen und radialen Kräften ausgesetzt. Zur Auslegung von Getrieben werden durch Anlagenbetreiber bzw. -hersteller definierte Lastkollektive verwendet. Probleme können entstehen, wenn diese Lastkollektive nicht im Betrieb auftretenden tatsächlichen Belastungen entsprechen. Um Überlastungssituationen zu erkennen und zu vermeiden, können in einem Getriebe Drehmomentsensoren vorgesehen werden.

Eine Drehmomentmessung an einer Welle basiert vielfach darauf, daß eine Welle Torsionsfedereigenschaften aufweist und durch Drehmomenteinfluß eine Verdrehung erfährt. Diese Verdrehung kann beispielsweise mittels Dehnmeßstreifen, optischer Sensoren oder magnetoelastischer Sensoren ermittelt werden. Bei bekannter Torsionssteifigkeit der Welle kann aus der ermittelten Verdrehung das auf die Welle einwirkende Drehmoment abgeleitet werden.

Optische Sensoren können axial beabstandet an einer Welle angeordnete Schlitzscheiben umfassen, deren relative Verdrehung erfaßt wird. Eine solche Meßvorrichtung ist beispielsweise in DE 197 45 823 A1 beschrieben. Alternativ dazu können auf einer Welle auch optische Gitter vorgesehen sein, deren Verzerrung unter Drehmomenteinfluß ermittelt wird. Bei magnetoelastischen Sensoren werden ferromagnetische Werkstoffe verwendet, deren Permeabilität sich belastungsabhängig ändert.

Aus DE 28 15 463 A1 ist bekannt, an einer Welle in einem axialen Abstand zwei elektromagnetische Impulsgeber anzuordnen, denen jeweils ein elektromagnetischer Fühler zugeordnet ist. Mit den Fühlern und einem nachgeschalteten Komparator können drehmomentbedingte Phasenverschiebungen zwischen durch die Impulsgeber erzeugten Signalen ermittelt werden.

In WO 2000/08434 A1 ist eine Sensoranordnung zur kombinierten Erfassung von Drehwinkel und Drehmoment an einem rotierenden mechanischen Bauteil beschrieben, bei der Winkelgeber und Sensoren derart angeordnet sind, daß eine Torsion des Bauteils als relative Winkeländerung zwischen den Winkelgebern erfaßbar ist. Zwei axial beabstandet mit dem mechanischen Bauteil verbundene Zahnräder weisen eine identische Zähnzahl auf und kämmen jeweils mit einem als Winkelgeber verwendeten Zahnrad. Die als Winkelgeber verwendeten Zahnräder weisen ebenfalls eine identische Zähnezahl auf. Zur genaueren Umrechung des Drehwinkels des Bauteils ist noch ein weiteres Zahnrad vorgesehen, das eine andere Zähnezahl als die als Winkelgeber verwendeten Zahnräder aufweist. Dieses weitere Zahnrad steht mit einem der Zahnräder in Eingriff, die mit dem Bauteil verbunden sind. Die aus WO 2000/08434 A1 bekannte Sensoranordnung beansprucht verhältnismäßig viel Platz und läßt sich nicht ohne weiteres in bestehende Getriebekonstruktionen integrieren. Zudem sind zur Integration einer derartigen Sensoranordnung in ein Getriebe üblicherweise lange Leitungszuführungen zum Installationsort für die Sensoren erforderlich. Dabei ist sicherzustellen, daß die Leitungszuführungen in geeigneter Weise insbesondere gegenüber mechanischen, thermischen und elektromagnetischen Belastungen geschützt sind.

Der vorliegenden Erfindung liegt die Aufgabe zugrunde, ein einfach in einem Getriebe zu realisierendes Verfahren zur Drehmomenterfassung anzugeben, das eine berührungslose, langfristig zuverlässige und störungsunempfindliche Messung ermöglicht, und eine geeignete Implementierung des Verfahrens zu schaffen.

Diese Aufgabe wird erfindungsgemäß durch ein Verfahren mit den in Anspruch 1 angegebenen Merkmalen, eine Meßvorrichtung mit den in Anspruch 12 angegebenen Merkmalen und ein Steuerungsprogramm mit den in Anspruch 13 angegebenen Merkmalen gelöst. Vorteilhafte Weiterbildungen der vorliegenden Erfindung sind in den abhängigen Ansprüchen angegeben.

Erfindungsgemäß wird zur Drehmomenterfassung in einem Getriebe mittels zumindest eines Schwingungssensors zumindest ein Schwingungssignal erfaßt, das einer Zahneingriffsfrequenz von miteinander in Eingriff stehenden Getriebeverzahnungen zugeordnet ist, und dessen Phasenverschiebung von zumindest einer Zahneingriffsdauer der miteinander in Eingriff stehenden Getriebeverzahnungen abhängig ist. Dabei ist die Zahneingriffsdauer infolge von Verzahnungsverformungen drehmomentabhängig. Aus der Phasenverschiebung des erfaßten Schwingungssignals und/oder der zumindest einen Zahneingriffsdauer wird ein auf das Getriebe einwirkendes Drehmoment ermittelt.

Die vorliegende Erfindung ermöglicht beispielsweise eine Nutzung bisher für Getriebezustandsüberwachungssysteme bzw. Condition-Monitoring-Systeme verwendete Schwingungssensoren zusätzlich zur Drehmomenterfassung. Im Gegensatz zu bisherigen berührungslosen Drehmomentmeßsystemen, die um eine Getriebewelle angeordnet sind und dort Platz beanspruchen, kann eine erfindungsgemäße Meßvorrichtung einfacher in Getriebe integriert werden.

Zur Drehmomenterfassung kann auch eine drehmomentabhängige Differenz zwischen Phasenverschiebungen von Zahneingriffsfrequenzen zumindest zweier unterschiedlicher Zahneingriffe ermittelt werden. Aus der Differenz zwischen den Phasenverschiebungen wird dann das auf das Getriebe einwirkende Drehmoment ermittelt. Alternativ dazu können mehrere Schwingungssignale oder Schwingungssignalkomponenten erfaßt werden, die mehreren unterschiedlichen Zahneingriffen zugeordnet sind. In diesem Fall wird das auf das Getriebe einwirkende Drehmoment anhand eines für mehrere unterschiedliche Zahneingriffe berechneten Mittelwerts ermittelt. Dabei können die Zahneingriffe des Getriebes auf Abweichungen zwischen dem Mittelwert und zahneingriffsindividuellen Drehmomentmeßwerten überwacht werden. Falls eine Abweichung einen vorgebbaren Schwellwert überschreitet, kann beispielsweise ein Alarmsignal erzeugt werden, daß eine Angabe eines betroffenen Zahneingriffs umfaßt.

Die vorliegende Erfindung wird nachfolgend an einem Ausführungsbeispiel näher erläutert. Es zeigt
- Figur 1: eine beispielhafte Darstellung eines Zahneingriffs eines Stirnradpaars mit Evolventenverzahnung,
- Figur 2: ein für mehrere unterschiedliche Drehmomentbelastungen erstelltes Diagramm mit Verläufen von Zahnflankenpressungen entlang einer Zahneingriffsstrekke,
- Figur 3: eine schematische Darstellung einer Anordnung mit einem Getriebe und einem Drehmomentmeßvorrichtung.

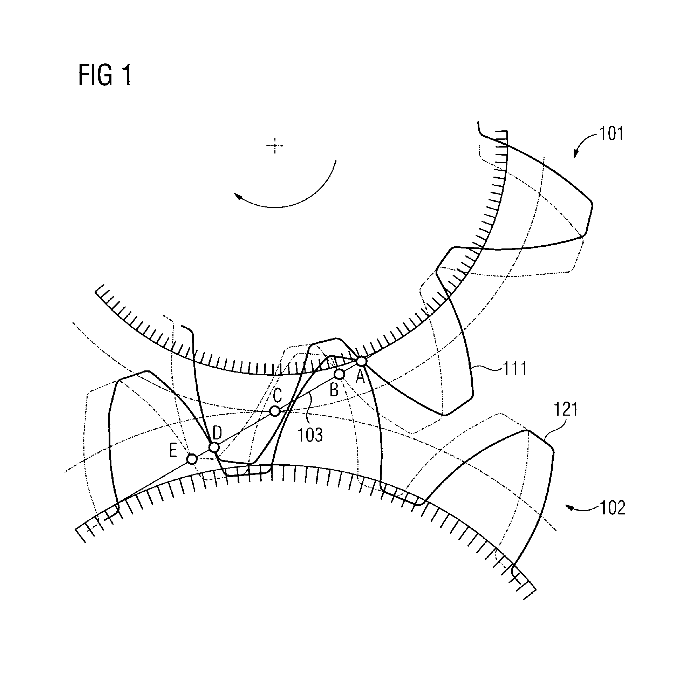

Zum besseren Verständnis der vorliegenden Erfindung ist in Figur 1 beispielhaft ein Zahneingriff eines Stirnradpaars mit Evolventenverzahnung dargestellt. Beide Zahnräder 101, 102 des Stirnradpaars sind dort in einer ersten Stellung (durchgehende Linie) zu einem Zeitpunkt T1 dargestellt, zu dem ein Zahn 111 eines ersten Zahnrads 101 an einem Eingriffspunkt A in Eingriff mit einem Zahn 121 eines zweiten Zahnrads 102 kommt. Außerdem sind die beiden Zahnräder 101, 102 in einer zweiten Stellung (gestrichelte Line) zu einem Zeitpunkt T2 dargestellt, zu dem der Eingriff zwischen dem Zahn 111 des ersten Zahnrads 101 und dem Zahn 121 des zweiten Zahnrads 102 an einem Eingriffspunkt E endet, wenn beide Zahnräder 101, 102 in skizzierter Richtung gedreht werden. Zwischen einem Eingriffspunkt B und einem Eingriffspunkt D stehen in einem Einzeleingriffsgebiet nur die beiden Zähne 111, 121 der Zahnräder 101, 102 miteinander in Eingriff. Dagegen stehen zwischen den Eingriffspunkten A und B sowie zwischen den Eingriffspunkten D und E in Doppeleingriffsgebieten auch weitere Zähne der Zahnräder 101, 102 miteinander in Verbindung. In einem auch Wälzpunkt bezeichneten Eingriffspunkt C wälzen die Zahnräder 101, 102 gleitreibungsfrei aufeinander ab. Die Eingriffspunkte A-E liegen bei einer Evolventenverzahnung auf einer Geraden 103.

Im Eingriff befindliche Zähne eines Zahnradpaars verformen sich unter der Last, so daß in Drehrichtung folgende Zähne relativ betrachtet früher in Eingriff kommen. Hieraus resultieren variierende Zahneingriffsdauern und Zahnkraftschwankungen, die wiederum zu Geräuschen und Schwingungen führen. Diese Geräusche bzw. Schwingungen können als Schwingungssignal mittels eines Schwingungssensors erfaßt werden. Dabei ist das Schwingungssignal repräsentativ für eine Zahneingriffsfrequenz des Zahnradpaars, dessen Zahnräder miteinander in Eingriff stehen. Das Schwingungssignal weist dabei eine Phasenverschiebung auf, die von zumindest einer Zahneingriffsdauer der miteinander in Eingriff stehenden Zahnräder abhängig ist.

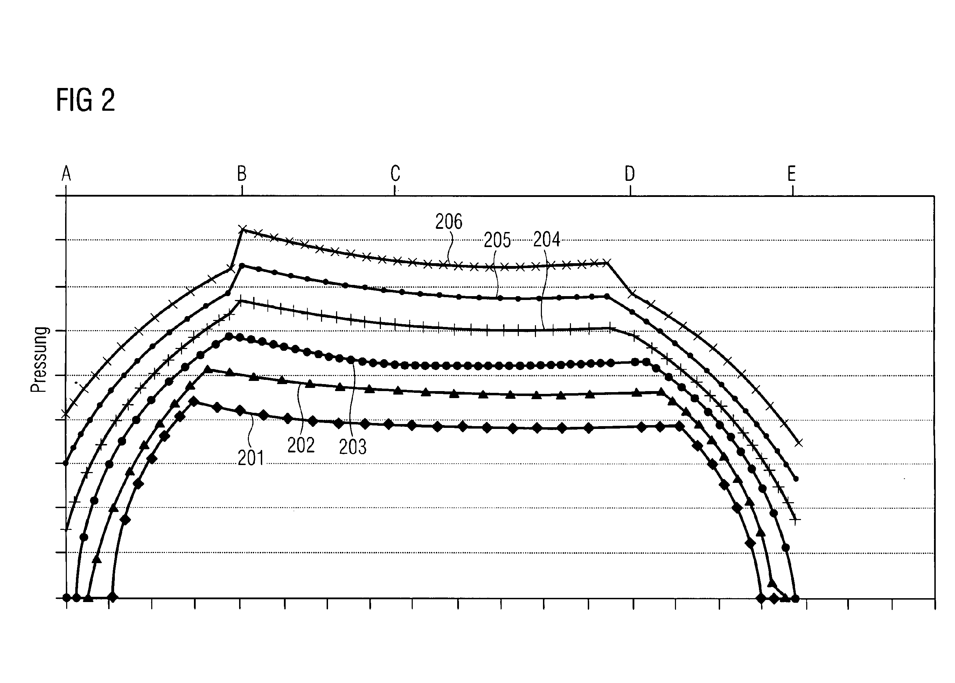

Bei gradverzahnten Zahnrädern entstehen unter Belastung Verformungen, die im wesentlichen durch Zahnsteifigkeit und einwirkendes Drehmoment bestimmt sind. Hieraus resultiert eine mit steigendem Drehmoment zunehmende Phasenverschiebung des Zahneingriffs. Dies gilt grundsätzlich auch für Zahnräder mit Schrägverzahnung. Entsprechend dem in Figur 2 für mehrere unterschiedliche Drehmomentbelastungen erstellten Diagramm mit Verläufen 201-206 von Zahnflankenpressungen nimmt die Zahneingriffsdauer entlang einer Zahneingriffsstrecke zwischen den Eingriffspunkten A und E mit wachsendem Drehmoment stetig zu. Der Verlauf 201 ist der geringsten Drehmomentbelastung zugeordnet, während der Verlauf 206 der höchsten Drehmomentbelastung zugeordnet ist. Von Verlauf 201 bis Verlauf 206 nimmt die Drehmomentbelastung stetig zu. Außerdem ist anhand der Zahnflankenpressungen ersichtlich, daß die Zahneingriffsdauer entlang einer Zahneingriffsstrecke zwischen den Eingriffspunkten B und D mit wachsender Drehmomentbelastung abnimmt. Dieses belastungsabhängige Verhalten läßt sich beispielsweise mit Luftschallschwingungsaufnehmern oder Körperschallschwingungsaufnehmern detektieren.

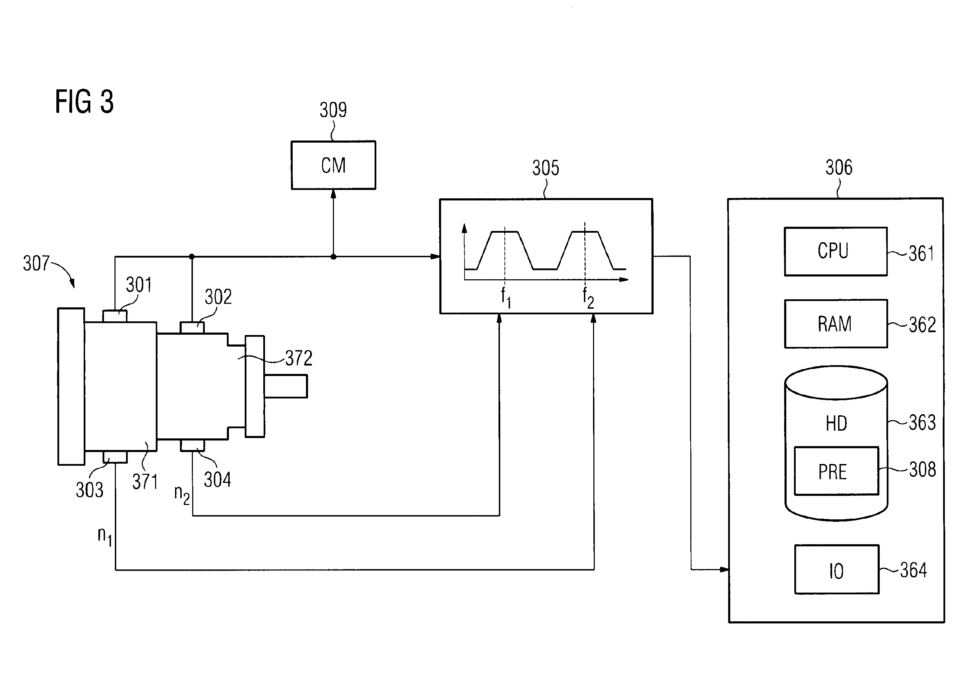

Die in Figur 3 schematisch dargestellte Anordnung umfaßt eine Drehmomentmeßvorrichtung mit zwei an einem Gehäuse eines Getriebes 307 montierten Schwingungssensoren 301, 302 und einer computerbasierten Signalverarbeitungseinheit 306. Grundsätzlich ist auch ein einziger Schwingungssensor ausreichend. In diesem Fall sollte eine Signalverarbeitungseinheit mit höherer Rechenleistung ausgewählt werden, die beispielsweise auch rein hardwarebasiert ausgeführt sein kann.

Mittels der beiden Schwingungssensoren 301, 302 werden Schwingungssignale erfaßt, die jeweils eine Zahneingriffsfrequenz von miteinander in Eingriff stehenden Getriebeverzahnungen einer ersten Getriebestufe 371 und einer zweiten Getriebestufe 372 repräsentieren. Wie oben erläutert, sind die Phasenverschiebungen der Zahneingriffsfrequenzen von den Zahneingriffsdauern der miteinander in Eingriff stehenden Getriebeverzahnungen abhängig. Die Zahneingriffsdauern wiederum sind infolge von Verzahnungsverformungen drehmomentabhängig. Die beiden Schwingungssensoren 301, 302 sind zur Schwingungssignaturermittlung verwendete Sensoren eines Condition-Monitoring-Systems 309 für das Getriebe 307, so daß bei einem vorhandenen Condition-Monitoring-System grundsätzliche keine neuen Sensoren zur Drehmomenterfassung erforderlich sind.

Mit zwei Schwingungssensoren kann zusätzlich ausgenutzt werden, daß ein Antriebstrang zwischen den miteinander in Eingriff stehenden Getriebeverzahnungen der ersten Getriebestufe 371 und denen der zweiten Getriebestufe 372 drehmomentabhängige Verdrehungen erfährt. Diese Verdrehungen des Antriebsstrangs führen zu Phasenverschiebungen zwischen den durch die beiden Schwingungssensoren 301, 302 erfaßten Schwingungssignalen. Häufig weist der Antriebesstrang zwischen den betrachteten Getriebeverzahnungen eine Torsionsfedersteifigkeit auf, die für sämtliche Getriebe einer Baureihe weitgehend identisch ist und im Rahmen einer Kalibrierung beispielsweise an einem Getriebeprüfstand ermittelt werden kann.

Die Signalverarbeitungseinheit 306 der Drehmomentmeßvorrichtung umfaßt einen Prozessor 361, einen Arbeitsspeicher 362, einen nichtflüchtigen Speicher 363 - beispielsweise eine Festplatte oder einen Flash-Speicher - und eine Ein-/Ausgabeeinheit 364. Die Signalverarbeitungseinheit 305 ist über einen dieser zugeordneten Bandpaßfilter 305 an die Schwingungssensoren 301, 302 gekoppelt.

Im Speicher 363 der Signalverarbeitungseinheit 306 ist ein Steuerungsprogramm 308 gespeichert, das in den Arbeitsspeicher 362 ladbar ist und durch den Prozessor 361 verarbeitbare Codeabschnitte aufweist, bei deren Ausführung über die Schwingungssensoren 301, 302 Schwingungssignale erfaßt werden. Aus den Phasenverschiebungen der erfaßten Schwingungssignale bzw. aus den erfaßten Zahneingriffsdauern wird durch das Steuerungsprogramm 308 ein auf das Getriebe 307 einwirkendes Drehmoment ermittelt, wenn dieses in der Signalverarbeitungseinheit 306 abläuft. Beispielsweise durch Lagerluft oder Zahnspiel bedingtes Spiel im Antriebsstrang kann mit dem durch das Steuerungsprogramm implementierten Verfahren aus einem hystereseartigen Verlauf des ermittelten Drehmoments abgeleitet werden.

Durch die Signalverarbeitungseinheit 306 können die erfaßten Schwingungssignale auch von einem Frequenzbereich in einen Zeitbereich transformiert werden, beispielsweise mittels inverser Laplace- oder Forrier-Transformation oder mittels inverser Z-Transformation bei diskreten Signalen. Aus den in den Zeitbereich transformierten Schwingungssignalen können dann die Zahneingriffsdauern zwischen den Eingriffspunkten B und D und zwischen den Eingriffspunkten A und E ermittelt werden.

Die mittels der Schwingungssensoren 301, 302 erfaßten Schwingungssignale werden durch den Bandpaßfilter 305 in bezug auf vorgebbare Frequenzbereiche um Zahneingriffsgrundfrequenzen der betrachteten Getriebeverzahnungen für die Signalverarbeitungseinheit 306 vorverarbeitet. Die Zahneingriffgrundfrequenzen werden im vorliegenden Ausführungsbeispiel mittels den beiden Getriebestufen 371, 372 zugeordneter Drehzahlmesser 303, 304 ermittelt.

Das vorangehend beschriebene Verfahren zur Drehmomenterfassung in einem Getriebe kann durch Mittelwertbildung über mehrere Drehmomentmeßsignale erweitert werden. Auf diese Weise können einzelne Geometrieabweichungen der Getriebeverzahnungen gegeneinander angesetzt und Verzahnungsabweichungen oder vergrößertes Spiel detektiert werden. Hierzu werden mehrere Schwingungssignale oder Schwingungssignalkomponenten erfaßt, die mehreren unterschiedlichen Zahneingriffen zugeordnet sind. Das auf das Getriebe einwirkende Drehmoment wird dann anhand eines für mehrere unterschiedliche Zahneingriffe berechneten Mittelwerts ermittelt. Damit können Zahneingriffe des Getriebes auf Abweichungen zwischen dem Mittelwert und zahneingriffsindividuellen Drehmomentmeßwerten überwacht werden. Bei einer über einem vorgebbaren Schwellwert liegenden Abweichung wird beispielsweise ein Alarmsignal erzeugt, das eine Angabe eines betroffenen Zahneingriffs umfaßt.

Die Anwendung der vorliegenden Erfindung ist nicht auf das hier beschriebene Ausführungsbeispiel beschränkt.

## Patentansprüche

1. Verfahren zur Drehmomenterfassung in einem Getriebe, bei dem
- mittels zumindest eines Schwingungssensors zumindest ein Schwingungssignal erfaßt wird, das einer Zahneingriffsfrequenz von miteinander in Eingriff stehenden Getriebeverzahnungen zugeordnet ist, und dessen Phasenverschiebung von zumindest einer Zahneingriffsdauer der miteinander in Eingriff stehenden Getriebeverzahnungen abhängig ist,
- die Zahneingriffsdauer infolge von Verzahnungsverformungen drehmomentabhängig ist,
- aus der Phasenverschiebung des erfaßten Schwingungssignals und/oder der zumindest einen Zahneingriffsdauer ein auf das Getriebe einwirkendes Drehmoment ermittelt wird.

2. Verfahren nach Anspruch 1,
bei dem eine drehmomentabhängige Differenz zwischen Phasenverschiebungen von Zahneingriffsfrequenzen zumindest zweier unterschiedlicher Zahneingriffe ermittelt wird, und bei dem aus der Differenz zwischen den Phasenverschiebungen das auf das Getriebe einwirkende Drehmoment ermittelt wird.

3. Verfahren nach Anspruch 1,
bei dem mehrere Schwingungssignale oder Schwingungssignalkomponenten erfaßt werden, die mehreren unterschiedlichen Zahneingriffen zugeordnet sind, und bei dem das auf das Getriebe einwirkende Drehmoment anhand eines für mehrere unterschiedliche Zahneingriffe berechneten Mittelwerts ermittelt wird.

4. Verfahren nach Anspruch 3,
bei dem Zahneingriffe des Getriebes auf Abweichungen zwischen dem Mittelwert und zahneingriffsindividuellen Drehmomentmeßwerten überwacht werden, und bei dem bei einer über einem vorgebbaren Schwellwert liegenden Abweichung ein Alarmsignal erzeugt wird.

5. Verfahren nach Anspruch 4,
bei dem das Alarmsignal eine Angabe eines betroffenen Zahneingriffs umfaßt.

6. Verfahren nach einem der Ansprüche 1 bis 5,
bei dem das zumindest eine Schwingungssignal von einem Frequenzbereich in einen Zeitbereich transformiert wird, und bei dem aus dem in den Zeitbereich transformierten Schwingungssignal eine Zahneingriffsdauer zwischen einem Eingriffspunkt B und einem Eingriffspunkt D und/oder eine Zahneingriffsdauer zwischen einem Eingriffspunkt A und einem Eingriffspunkt E ermittelt werden/wird.

7. Verfahren nach einem der Ansprüche 1 bis 6,
bei dem das zumindest eine Schwingungssignal in bezug auf einen vorgebbaren Frequenzbereich um eine Zahneingriffsgrundfrequenz bandpaßgefiltert wird.

8. Verfahren nach Anspruch 7,
bei dem die Zahneingriffgrundfrequenz mittels eines Drehzahlmessers ermittelt wird.

9. Verfahren nach einem der Ansprüche 1 bis 8,
bei dem der zumindest eine Schwingungssensor ein Luftschallschwingungsaufnehmer oder Körperschallschwingungsaufnehmer ist.

10. Verfahren nach einem der Ansprüche 1 bis 9,
bei dem der zumindest eine Schwingungssensor ein zur Schwingungssignaturermittlung verwendeter Sensor eines Condition-Monitoring-Systems ist.

11. Meßvorrichtung zur Ermittlung eines auf ein Getriebe einwirkenden Drehmoments mit
- zumindest einem Schwingungssensor zur Erfassung zumindest eines Schwingungssignals, das einer Zahneingriffsfrequenz von miteinander in Eingriff stehenden Getriebeverzahnungen zugeordnet ist, und dessen Phasenverschiebung von zumindest einer Zahneingriffsdauer der miteinander in Eingriff stehenden Getriebeverzahnungen abhängig ist, wobei die Zahneingriffsdauer infolge von Verzahnungsverformungen drehmomentabhängig ist,
- einer mit dem zumindest einen Schwingungssensor verbundenen Signalverarbeitungseinheit zur Ermittlung des auf das Getriebe einwirkenden Drehmoments aus der Phasenverschiebung des erfaßten Schwingungssignals und/oder der zumindest einen Zahneingriffsdauer.

12. Steuerungsprogramm zur Drehmomenterfassung in einem Getriebe, das in einen Arbeitsspeicher einer Datenverarbeitungseinrichtung ladbar ist und zumindest einen durch eine Prozessoreinheit verarbeitbaren Codeabschnitt aufweist, bei dessen Ausführung
- zumindest ein Schwingungssignal, das einer Zahneingriffsfrequenz von miteinander in Eingriff stehenden Getriebeverzahnungen zugeordnet ist, und dessen Phasenverschiebung von zumindest einer Zahneingriffsdauer der miteinander in Eingriff stehenden Getriebeverzahnungen abhängig ist, mittels zumindest eines Schwingungssensors erfaßt wird, wobei die Zahneingriffsdauer infolge von Verzahnungsverformungen drehmomentabhängig ist,
- aus der Phasenverschiebung des erfaßten Schwingungssignals und/oder der zumindest einen Zahneingriffsdauer ein auf das Getriebe einwirkendes Drehmoment ermittelt wird, wenn das Steuerungsprogramm in der Datenverarbeitungseinrichtung abläuft.
